# EUROPÄISCHE PATENTSCHRIFT

(11) **EP 1 635 435 B1**
(45) Veröffentlichungstag und Bekanntmachung des Hinweises auf die Patenterteilung: **13.06.2012**
(21) Anmeldenummer: 05012010.4
(22) Anmeldetag: 03.06.2005
(51) Int. Cl.: H02G 3/14

(54) **Elektrische/elektronische Installationseinheit**
Electrical/electronical installation unit
Unité d'installation électrique/électronique

(30) Priorität: 09.09.2004 DE 102004043650
(43) Veröffentlichungstag der Anmeldung: 15.03.2006
(73) Patentinhaber: Albrecht Jung GmbH & Co. KG, 58579 Schalksmühle (DE)
(72) Erfinder: Gebhardt, Marc, 58579 Schalksmühle (DE); Kandt, Richard, 44803 Bochum (DE); Ullrich, Konrad, 58339 Breckerfeld (DE)

(56) Entgegenhaltungen:
- EP-A- 0 833 420
- EP-A- 1 202 310
- DE-U1- 20 007 507
- DE-U1- 29 803 339

## Beschreibung

Die vorliegende Erfindung geht von einer gemäß Oberbegriff des Hauptanspruches konzipierten elektrischen/elektronischen Installationseinheit aus.

Derartige elektrische/elektronische Installationseinheiten sind in der Regel dafür vorgesehen, eine Vielzahl von in Gebäuden installierten Aktoren (Jalousieantriebe, Beleuchtungseinrichtungen, Fühler, Wächter usw.) bedarfsgerecht zu beeinflussen. Zu diesem Zweck sind die unterschiedlichsten Installationseinrichtungen, wie Schalter, Taster, Dimmer usw. bekannt geworden.

Durch die DE 40 00 623 A1 und die EP 0 833 420 A2 sind jeweils eine dem Oberbegriff des Hauptanspruches entsprechende elektrische/elektronische Installationseinheiten für die Gebäudesystemtechnik bekannt geworden. Bei diesen elektrischen/elektronischen Installationseinheiten für die Gebäudesystemtechnik ist ein in einer Installationsdose unterzubringendes erstes Funktionsmodul und ein in einem Gehäuse untergebrachtes, unter Zwischenschaltung eines Abdeckrahmens auf der Wand anzuordnendes zweites Funktionsmodul vorgesehen. Das zweite Funktionsmodul mit seinem Gehäuse ist jedoch derart ausgebildet und angeordnet, dass zu seiner formschönen Ergänzung ein relativ dick ausgebildeter Abdeckrahmen notwendig ist.

Ausgehend von derart ausgebildeten elektrischen/elektronischen Installationseinheiten liegt der vorliegenden Erfindung die Aufgabe zugrunde, eine Installationseinheit zu schaffen, bei der durch eine Bauhöhe einsparende Kooperation zwischen dem Gehäuse des zweiten Funktionsmoduls und dem Abdeckrahmen, die Verwendung besonders dünn ausgebildeter Abdeckrahmen auf einfache und kostengünstige Art und Weise möglich ist. Erfindungsgemäß wird diese Aufgabe durch die im Hauptanspruch angegebenen Merkmale gelöst.

Bei einer solchen Ausbildung ist besonders vorteilhaft, dass eine positionsgenaue Installation von Abdeckrahmen und zweitem Funktionsmodul und damit auch des ersten Funktionsmoduls auf besonders einfache Art und Weise bei gleichzeitiger Realisierung eines Putz- bzw. Tapetenausgleich gewährleistet ist.

Weitere vorteilhafte Ausgestaltungen des erfindungsgemäßen Gegenstandes sind in den Unteransprüchen angegeben. Anhand eines Ausführungsbeispiels sei die Erfindung im Prinzip näher erläutert, dabei zeigt:
- Fig. 1:: prinziphaft eine Explosionsdarstellung einer solchen elektrischen/elektronischen Installationseinheit;
- Fig. 2:: prinziphaft einen Zusammenbau einer elektrischen/elektronischen Installationseinheit, entsprechend Fig. 1;
- Fig. 3:: das Detail Z entsprechend Fig. 2 in vergrößerter Darstellung, wobei vom zweiten Funktionsmodul lediglich das Gehäuse mit Leiterplatte abgebildet ist.

Wie aus den Figuren hervorgeht, besteht eine solche elektrische/elektronische Installationseinheit für die Gebäudesystemtechnik im Wesentlichen aus einem in einer Installationsdose 1 unterzubringenden ersten Funktionsmodul 2 und einem in einem Gehäuse 3 untergebrachten, unter Zwischenschaltung eines Abdeckrahmens 4 auf der Wand anzuordnenden zweiten Funktionsmodul 5.

Wie des Weiteren aus den Figuren hervorgeht, sind in das aus Kunststoff bestehende Gehäuse 3 des zweiten Funktionsmoduls 5 acht taschenartigen Ausnehmungen 6 eingeformt, in die entsprechend nasenförmig, an die Innenseite 7 des ebenfalls aus Kunststoff hergestellten Abdeckrahmens 4 angeformte Halteelemente 8 formschlüssig eingreifen. Die acht im Gehäuse 3 vorhandenen taschenartigen Ausnehmungen 6 weisen jeweils eine wesentlich größere Tiefe auf, als die acht an den Abdeckrahmen 4 angeformten, nasenförmigen Halteelemente 8 dick sind. Die Anordnung und Ausbildung der taschenartigen Ausnehmungen 6 in Abstimmung auf die Halteelemente 8 ist dabei so gewählt, dass das Gehäuse 3 des zweiten Funktionsmoduls 5 in Bezug auf die Oberseite des Abdeckrahmens 4 tiefer gesetzt von diesem aufgenommen ist.

Zur sicheren und komfortablen Installation der Installationseinheit ist an der Installationsdose 1 ein aus Metall hergestellter Tragring 9 festlegbar, der an zwei gegenüberliegenden Bereichen angeformte in seine Durchtrittsöffnung 13 hineinragende Befestigungsmittel 10 aufweist. Die beiden Befestigungsmittel 10 sind dabei im Wesentlichen schienenartig ausgebildet. An das Gehäuse 3 des zweiten Funktionsmoduls 5 ist an zwei gegenüberliegenden Seiten jeweils entsprechend ein aus Metall hergestelltes Befestigungselement 11 angebracht. Die mit den Befestigungsmitteln 10 des Tragrings 9 korrespondierenden Befestigungselemente 11 sind dabei jeweils in Form einer federnden Doppelzunge ausgeführt. Bezüglich ihrer Anordnung und Ausbildung sind die Befestigungsmittel 10 und die Befestigungselemente 11 derart aufeinander abgestimmt, dass ein lang erstreckter Kooperationsbereich B realisiert ist, der eine sichere kraftschlüssige Verbindung entstehen lässt. Durch diesen lang erstreckten Kooperationsbereich B ist auf einfache Art und Weise bei sicherer Installation ein wirkungsvoller Putz- bzw. Tapetenausgleich realisiert.

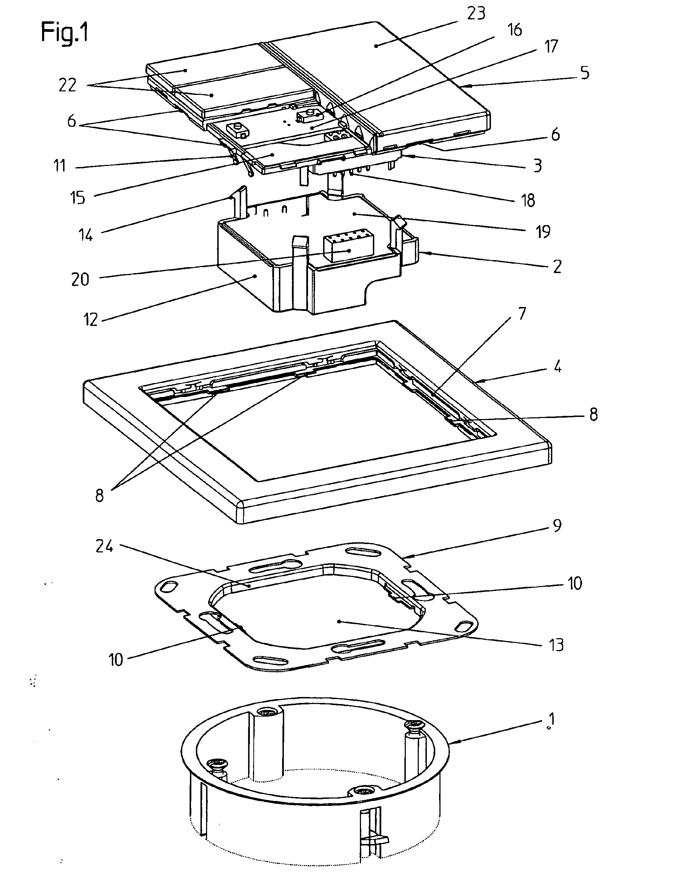

Wie insbesondere aus Figur 1 hervorgeht, ist das in die Installationsdose 1 hineinragende erste Funktionsmodul 2 mit einem, am Gehäuse 3 des zweiten Funktionsmoduls 5 festlegbaren separaten Gehäuseteil 12 umgeben. Zur Befestigung rasten an das separate Gehäuseteil 12 angeformte Rasthaken 14 in entsprechend ausgebildete, am Gehäuse 3 vorhandene Rastausnehmungen ein. Das Gehäuse 3 des zweiten Funktionsmoduls 5 hat einen flanschartig am Abdeckrahmen 4 zur Anlage kommenden ersten Gehäusebereich 15, der zur Aufnahme einer mit den notwendigen Schaltelementen 16 und sonstigen elektronischen Bauteilen bestückten ersten Leiterplatte 17 versehen ist. Die erste doppelseitig bestückte Leiterplatte 17 weist nach unten abragende Steckkontaktteile 18 auf, die zur elektrischen Verbindung des zweiten Funktionsmoduls 5 mit dem ersten Funktionsmodul 2 vorgesehen sind. Zu diesem Zweck weist das erste Funktionsmodul 2 eine zweite Leiterplatte 19 auf, welche außer mit den zur Funktion notwendigen Bauteilen mit einem entsprechend ausgeführten Steckerteil 20 bestückt ist. Zur Anbindung des separaten Gehäuseteils 12 ist das Gehäuse 3 mit einem als Ansatz ausgebildeten zweiten Gehäusebereich 21 versehen. Der zweite Gehäusebereich 21 ist außerdem zur Teilaufnahme von Funktionselementen des ersten Funktionsmoduls 2 vorgesehen.

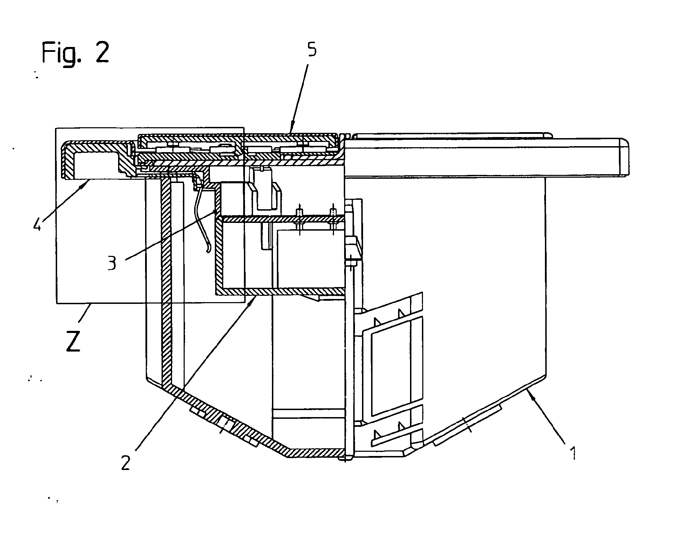

Wie des Weiteren insbesondere aus Figur 1 und Figur 2 hervorgeht, weist das zweite Funktionsmodul 5 als Abschluss mehrere Bedientasten 22 und eine Anzeigeeinheit 23 auf.

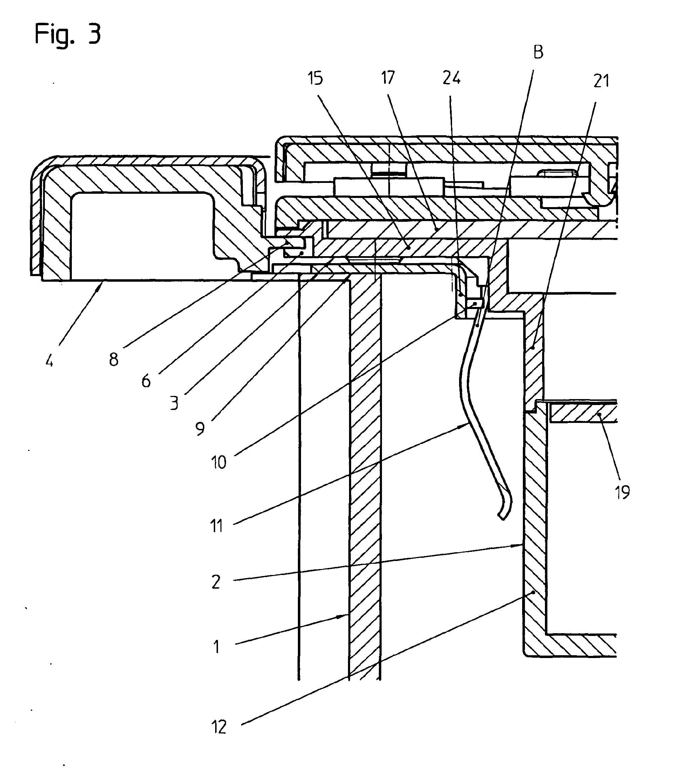

Wie insbesondere aus Figur 1 und Figur 3 hervorgeht, ist der Tragring 9 einstückig mit einem seine Durchtrittsöffnung 13 umgebenden abstehenden Kragen 24 versehen. Die beiden Befestigungsmittel 10 sind sich gegenüberliegend an den freien Endbereich des Kragens 24 angeformt.

Der Figur 3 ist deutlich zu entnehmen, dass das zweite Funktionsmodul 5 mit seinem Gehäuse 3 so weit wie möglich an die Wandebene herangerückt ist. Dies ist der Fall, weil die Auflage des Gehäuses 3 über die eingeformten taschenartigen Ausnehmungen 6 erfolgt, die an an den Abdeckrahmen 4 angeformte nasenförmige Halteelemente 8 zur Anlage kommen. Somit dringt die gesamte elektrische/elektronische Installationseinheit entsprechend tiefer in die Installationsdose 1 ein. Die Verwendung von besonders dünn ausgeführten Abdeckrahmen 4 ist somit auf einfache und kostengünstige Art und Weise möglich.

Wesentlich bei der Ausgestaltung einer solchen elektrischen/elektronischen Installationseinheit ist, dass das Gehäuse 3 des zweiten Funktionsmoduls 5 so tief wie möglich vom Abdeckrahmen 4 aufgenommen wird, bzw. in die Installationsdose 1 eintaucht, damit ein möglichst dünn ausgebildeter Abdeckrahmen 4 Verwendung finden kann.

## Patentansprüche

1. Elektrische/elektronische Installationseinheit für die Gebäudesystemtechnik mit einem in die Installationsdose hineinragenden ersten Funktionsmodul und einem in einem Gehäuse untergebrachten, unter Zwischenschaltung eines Abdeckrahmens auf der Wand anzuordnenden zweiten Funktionsmodul, wobei die Seitenwandungen des Gehäuses des zweiten Funktionsmoduls Anschlussbereiche aufweisen und wobei der Abdeckrahmen mit Anschlusszonen versehen ist, an denen die Anschlussbereiche des Gehäuses zur Anlage kommen, **dadurch gekennzeichnet, dass** zumindest ein an den Seitenwandungen des Gehäuses (3) des zweiten Funktionsmoduls (5) vorhandener Anschlussbereich als taschenartige Ausnehmungen (6), und dass zumindest eine am Abdeckrahmen (4) vorhandene Anschlusszone als formschlüssig in die taschenartige Ausnehmung (6) eingreifendes Halteelement (8) ausgebildet ist.

2. Elektrische/elektronische Installationseinheit nach Anspruch 1, **dadurch gekennzeichnet, dass** die Tiefe der im Gehäuse (3) vorhandenen taschenartigen Ausnehmungen (6) zumindest der Dicke der am Abdeckrahmen (4) vorhandenen Halteelemente (8) entspricht.

3. Elektrische/elektronische Installationseinheit nach Anspruch 1 oder 2,
**dadurch gekennzeichnet, dass** das Gehäuse (3) des zweiten Funktionsmoduls (5) zumindest ein Befestigungselement (11) aufweist, welches direkt mit der Installationsdose (1) in Verbindung zu bringen ist.

4. Elektrische/elektronische Installationseinheit nach einem der Ansprüche 1 bis 3, **dadurch gekennzeichnet, dass** an der Installationsdose (1) ein Tragring (9) festlegbar ist, welcher zumindest ein angeformtes Befestigungsmittel (10) aufweist, und dass am Gehäuse (3) des zweiten Funktionsmoduls (5) zumindest ein Befestigungselement (11) vorhanden ist, das kraftschlüssig mit dem Befestigungsmittel (10) des Tragringes (9) in Verbindung kommt.

5. Elektrische/elektronische Installationseinheit nach einem der Ansprüche 1 bis 4, **dadurch gekennzeichnet, dass** das in die Installationsdose (1) hineinragende erste Funktionsmodul (2) mit einem, am Gehäuse (3) des zweiten Funktionsmoduls (5) festlegbaren separaten Gehäuseteil (12) umgeben ist.

6. Elektrische/elektronische Installationseinheit nach einem der Ansprüche 1 bis 5, **dadurch gekennzeichnet, dass** das erste Funktionsmodul (2) integral vom zweiten Funktionsmoduls (5) umfasst ist.

## Claims

1. Electrical/electronic installation unit for use in building system engineering having a first functional module projecting into the installation box and a second functional module which is accommodated in a housing and is to be arranged on the wall with the interposition of a cover frame, whereby the side walls of the housing of the second functional module have connecting areas and whereby the cover frame is provided with connecting zones on which the connecting areas of the housing come to rest, **characterised in that** at least one connecting area provided on the side walls of the housing (3) of the second functional module (5) is designed as pouch-like recesses (6) and that at least one connecting zone provided on the cover frame (4) is designed as a retention element (8) that engages in the pouch-like recess (6) in a form-fit manner.

2. Electrical/electronic installation unit according to Claim 1, **characterised in that** the depth of the pouch-like recesses (6) provided in the housing (3) corresponds at least to the thickness of the retention elements (8) provided on the cover frame (4).

3. Electrical/electronic installation unit according to Claim 1 or Claim 2, **characterised in that** the housing (3) of the second functional module (5) has at least one fastening element (11) which is to be directly connected to the installation box (1).

4. Electrical/electronic installation unit according to any of Claims 1 to 3, **characterised in that** a supporting ring (9) that can be located on the installation box (1) has at least one integrally moulded fastening means (10), and that at least one fastening element (11) is provided on the housing (3) of the second functional module (5) and is connected to the fastening means (10) of the supporting ring (9) in a force-fit manner.

5. Electrical/electronic installation unit according to any of Claims 1 to 4, **characterised in that** the first functional module (2) that projects into the installation box (1) is encircled by a separate housing member (12) that can be located on the housing (3) of the second functional module (5).

6. Electrical/electronic installation unit according to any of Claims 1 to 5, **characterised in that** the first functional module (2) is integrally enclosed by the second functional module (5).

## Revendications

1. Unité d'installation électrique / électronique pour un système immotique, comprenant un premier module fonctionnel saillant dans la boîte de raccordement à encadrer et un deuxième module fonctionnel logé dans un boîtier et à disposer sur la paroi par intercalage d'un cadre de recouvrement, les parois latérales du boîtier du deuxième module fonctionnel présentant des zones de raccordement et le cadre de recouvrement étant muni de zones de raccordement auxquelles les zones de raccordement du boîtier sont adjacentes, **caractérisée en ce qu'**au moins une zone de raccordement présente sur les parois latérales du boîtier (3) du deuxième module fonctionnel (5) est constituée en tant qu'évidements (6) sous forme de poches et qu'au moins une zone de raccordement présente sur le cadre de recouvrement /4) est constituée en tant qu'élément de maintien (8) s'engrenant à engagement positif dans l'évidement (6) sous forme de poches.

2. Unité d'installation électrique / électronique selon la revendication 1, **caractérisée en ce que** la profondeur des évidements (6) sous forme de poches présentes dans le boîtier (3) correspond au moins à l'épaisseur des éléments de maintien (8) présents au niveau du cadre de maintien (4).

3. Unité d'installation électrique / électronique selon l'une quelconque des revendications 1 ou 2, **caractérisée en ce que** le boîtier (3) du deuxième module fonctionnel (5) présente au moins un élément de fixation (11) qu'il y a lieu de relier directement à la boîte de raccordement à encastrer (1).

4. Unité d'installation électrique / électronique selon l'une quelconque des revendications 1 à 3, **caractérisée en ce qu'**un anneau porteur (9) est définissable sur la la boîte de raccordement à encastrer (1) et présentant au moins un moyen de fixation (10) venant en une pièce avec ce dernier et qu'il y a, sur le boîtier (3) du deuxième module fonctionnel (5), au moins un élément de fixation (11) relié par adhérence au moyen de fixation (10) de l'anneau porteur (9).

5. Unité d'installation électrique / électronique selon l'une quelconque des revendications 1 à 4, **caractérisée en ce que** le premier module fonctionnel (2) saillant dans la boîte de raccordement à encastrer (1) est entouré d'une partie séparée du boîtier (12) et définissable sur le boîtier (3) du deuxième module fonctionnel (5).

6. Unité d'installation électrique / électronique selon l'une quelconque des revendications 1 à 5, **caractérisée en ce que** le premier module fonctionnel (2) est intégralement entouré par le deuxième module fonctionnel (5).
